# EUROPEAN PATENT SPECIFICATION

(11) **EP 4 186 345 B1**
(45) Date of publication and mention of the grant of the patent: **15.07.2026**
(21) Application number: 22383133.0
(22) Date of filing: 25.11.2022
(51) Int. Cl.: A01D 34/416

(54) **QUICK-CONNECTING DEVICE FOR CABLE SUPPORT AND CABLE EXTRACTION FOR AGRICULTURAL BRUSHCUTTING OR CLEANING MACHINES**
SCHNELLVERBINDUNGSVORRICHTUNG FÜR KABELTRÄGER UND KABELABSAUGUNG FÜR LANDWIRTSCHAFTLICHE FREISCHNEIDER- ODER REINIGUNGSMASCHINEN
DISPOSITIF DE RACCORDEMENT RAPIDE POUR SUPPORT DE CÂBLE ET EXTRACTION DE CÂBLE POUR MACHINES AGRICOLES DE COUPE OU DE NETTOYAGE DE BROSSE

(30) Priority: 26.11.2021 ES 202131100
(43) Date of publication of application: 31.05.2023
(73) Proprietor: Industrias David S.L.U., 30510 Yecla (Murcia) (ES)
(72) Inventor: LÓPEZ MARTÍNEZ, Javier, 30510 YECLA (Murcia) (ES)
(74) Representative: Herrero & Asociados, S.L.

(56) References cited:
- US-A1- 2011 232 106

## Description

### Technical field of the invention

The present invention corresponds to the technical field of agriculture, in particular to brushcutting or cleaning machines which operate on the ground by means of cables with a rotating movement around a drive shaft.

### Background to the Invention

Nowadays, in the agricultural sector and specifically in the field of land clearing or cleaning, self-propelled machines or machines that can be coupled to tractors or other traction vehicles are increasingly used, which have a chassis and one or more heads, and which act on the area to be cleared by means of cables that rotate at high speed, so that the whips they generate produce a cleaning of the area. This brushcutting and cleaning mechanism is valid both in the open field and in the drip lines of crops planted in rows.

In this report, we understand cable to be any wire or filament used in these machines, which can be a metallic cable or any other type of cable, the most common being made of synthetic plastic material, such as nylon.

This cable, due to the friction it exerts on the ground and the material to be cleared, tends to suffer rapid wear and tear, which means that it needs to be changed frequently so that the machine can continue to perform its cleaning and clearing function.

The process of changing the cable is time-consuming and costly for the machine operator, as it requires a number of tools to do so. A spanner is usually needed to release the end of the machine's rotating shaft, to which the cable reel is attached, then the reel is removed and part of the cable is unwound. Finally, the reel has to be repositioned and locked to the shaft again, so that it can rotate with the shaft.

Other options require partially disassembling the head and inserting the filaments one by one and winding them using specific tools.

This process has to be repeated very often due to the rapid wear of the cable, which is an inconvenience for cleaning and clearing work, so it is necessary to find a way to replace the cable without it being so cumbersome and time-consuming.

Patent application US2011/0232106 A1 relates to a trimmer head for a vegetation trimmer, wherein said trimmer head has a drop-down line reservoir that remains in cooperation with the head housing when the reservoir is in a load position.

### Description of the invention

The quick connection device for cable support and extraction for agricultural brushcutting or cleaning machines presented here, for clearing by means of cables with a rotating movement around a drive shaft, comprises a first part with a first hollow shaft suitable for the connection inside it of the drive shaft.

This first part further comprises a cover at one end of the first shaft, and a side surface emerging from the cover which has a through hole and two diametrically opposed slots. Both grooves extend from the end opposite the cover to an intermediate section and allow the ends of a cable to pass through them.

The device also includes a second part suitable for fitting inside the first part and has a second hollow shaft that allows the first shaft to pass inside it.

Thus, the cable is wound around the second axis of this second part, between a first and a second stop which are fixed at the ends of this second axis. In addition, the first stop has a flange facing towards the second stop.

Furthermore, the device comprises a retractable pin arranged on the outer face of the flange, such that it has a position of engagement in the through hole for a fixed position of the second part in relation to the first part and a position disengaged from the through hole for a position where the second part can freely rotate inside the first part.

It also includes means for actuating the first part which pulls the second part through the retractablepin.

The proposed quick-connection device for cable support and extraction for agricultural brushcutting or cleaning machines represents a significant improvement on the state of the art.

This is because it provides a way to replace a worn cable without having to dismantle the machine in whole or in part to free a new cable end.

With this device, on the one hand, it is possible to wind up a large length of cable, which can be between 20 and 50 m or even more, depending on the model, and in this way, the cable can be unwound little by little, as it wears out, thus reducing machine downtime.

To unwind the cable, all you have to do is to press the retractable pin, which releases the second piece and allows it to turn with respect to the first piece, thus unwinding part of the cable, the ends of which come out through the grooves of the first piece. In this way, it is possible to have two new cable ends in perfect condition without having to dismantle any part of the machine, just by turning the second piece inside.

This results in significantly shorter cable replacement times, and also makes the process much easier for the operator, as no tools are required to carry it out.

When the cable is finished, the second piece can be replaced by another piece already pre-loaded with a coil of cable wound on its second axis or the second empty piece can be removed and a new cable wound on it.

It is therefore a very efficient device, which facilitates the operator's work and significantly reduces cable change times.

### Brief description of the drawings

In order to assist in a better understanding of the features of the invention, in accordance with a preferred example of a practical embodiment thereof, a series of drawings is provided as an integral part of this description, in which the following is shown for illustrative and non-limiting purposes:
Figure 1.- Shows a perspective view of the first part of the quick connection device for cable support and extraction for agricultural brushcutting or cleaning machines, for a preferred embodiment of the invention.
Figure 2.- Shows a perspective view of the second part of the quick connection device for cable support and extraction for agricultural brushcutting or cleaning machines, for a preferred embodiment of the invention.
Figure 3.- Shows a perspective view of the quick connection device for cable support and extraction for agricultural brushcutting or cleaning machines, for a preferred embodiment of the invention.
Figure 4.- Shows a perspective view of the quick connection device for cable support and cable extraction for agricultural brushcutting or cleaning machines, mounted with cable, for a preferred embodiment of the invention.

### Detailed description of a preferred embodiment of the invention

In view of the figures provided, it can be seen how, in a preferred embodiment of the invention, the quick connection device for cable support and extraction for agricultural brushcutting or cleaning machines proposed here, for clearing or cleaning by means of cables with a rotating movement around a drive shaft, comprises a first part (1) comprising a first shaft (1.1) hollow, suitable for the connection of the drive shaft inside it, and a second part (2) suitable for fitting inside the first part (1), comprising a second hollow shaft (2.1) which allows the passage of the first shaft (1.1) inside it.

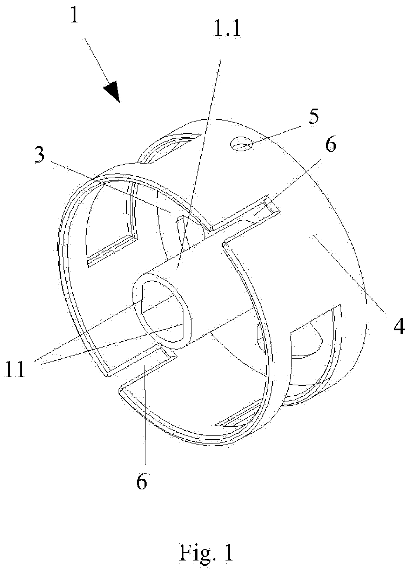

As shown in Figure 1, the first part (1) further comprises a cover (3) at one end of the first shaft (1.1) and a side surface (4) emerging therefrom with a through hole (5) and two diametrically opposed slots (6), which extend from the end opposite the cover (3) to an intermediate section and allow the ends of a cable (7) to pass through them.

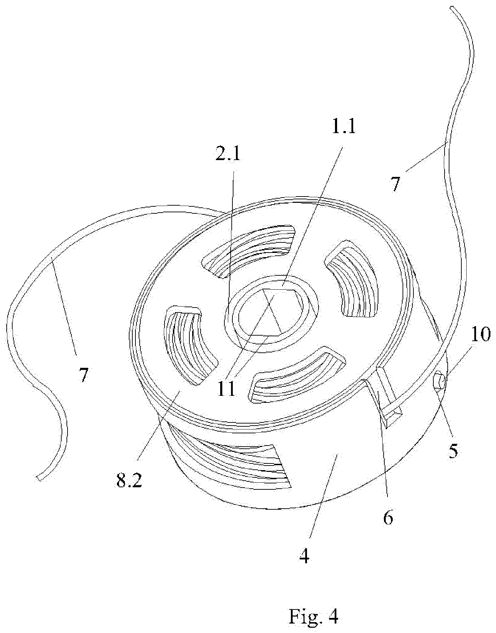

Likewise, and as can be seen in Figure 4, the second shaft (2.1) also allows the winding of the cable (7) around it between a first and a second stop (8.1, 8.2) fixed at the ends of the second shaft (2.1) and, where the first stop (8.1) has a flange (9) oriented towards the second stop (8.2).

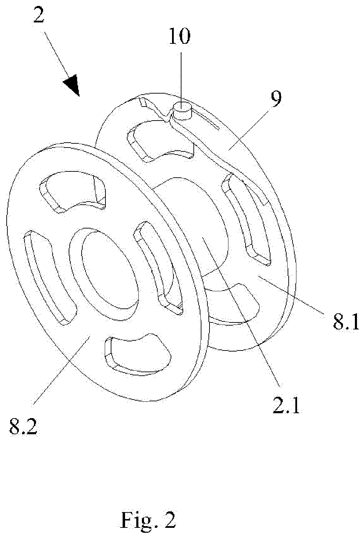

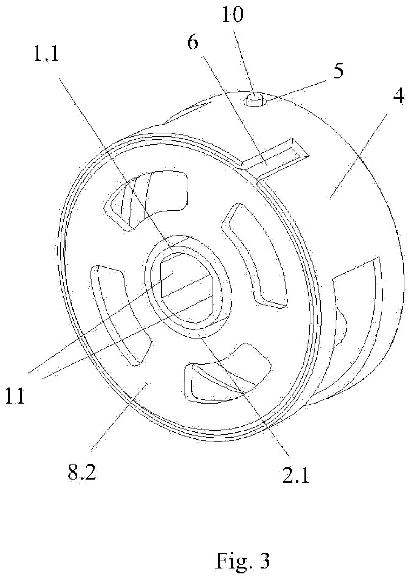

This device further comprises a retractable pin (10) arranged on the outer face of said flange (9), as can be seen in Figure 2, such that it has a position of engagement in the through hole (5) for a fixed position of the second part (2) with respect to the first part, shown in Figure 3, and a position disengaged from said hole (5), for a free rotating position of the second part (2) inside the first part (1).

It also has means for driving the first part (1) which pulls the second part (2) through the retractable pin (10) and which, in this embodiment, consists of an oil-hydraulic motor.

Thus, the cable (7) is wound onto the second part (2) and then the resulting assembly is inserted into the first part (1), so that the pin (10) is oriented towards the cover (3) of the first part (1), so that the pin (10) engages in the hole (5) of the cover (3) of the first part (1). The two ends of the cable (7) are extracted, each one through one of the slots (6) of the first part (1), as shown in Figure 4, and the assembly is placed on the drive shaft.

As shown in Figure 1, in this preferred embodiment of the invention, the first shaft (1.1) has means of attachment to the drive shaft which, in this case where the drive shaft has a lateral surface formed by flat faces, are formed by at least two flat faces (11) on the inner surface of the first shaft (1.1).

In order to unwind the cable (7), the process consists of pressing the pin (10), so that it disengages from the hole (5) and allows the second part (2) to rotate inside and relative to the first part (1), at the same time as the cable (7) is being unwound.

When the second part (2) has been turned once more, the pin (10) reaches the height of the hole (5) and snaps back into the hole, thus locking the cable (7) and preventing it from unwinding further.

If a longer length of wire (7) is required, the process is simply repeated and the same length of wire (7) is unwound again after one complete turn of the second piece (2).

In this preferred embodiment of the invention, the hole (5) of the first part (1) is arranged close to the cover (3) of the same.

Moreover, in this preferred embodiment, the flange (9) of the second part (2) is perpendicular to the first stop (8.1) and is arranged at least on a part of the contour of the first stop (8.1).

## Claims

1. Quick coupling device for cable support and cable extraction for agricultural brushcutting or cleaning machines, for clearing by means of cables (7) with a rotating movement around a drive shaft, said quick coupling device comprising:
- a first part (1) comprising a first hollow shaft (1.1) suitable for the connection inside it of the drive shaft, a cover (3) at one end of the first shaft (1.1), and a side surface (4) emerging therefrom and two diametrically opposed slots (6), which extend from the end opposite the cover (3) to an intermediate section and allow the ends of a cable (7) to pass through them;
- a second part (2) suitable for fitting inside the first part (1), comprising a second hollow shaft (2.1), which allows the passage of the first shaft (1.1) inside it and the winding of the cable (7) around it, between a first and a second stop (8.1, 8.2) fixed at the ends of the second shaft (2.1),
**characterized in that:**
- the side surface (4) of the first part (1) has a through hole (5);
- the first stop (8.1) of the second part (2) has a flange (9) facing the second stop (8.2);
wherein the quick coupling device further comprises:
- a retractable pin (10) arranged on the outer face of the flange (9), such that it has a position of engagement in the through hole (5) for a fixed position of the second part (2) in relation to the first part (1) and a position disengaged from the through hole (5), for a free rotating position of the second part (2) inside the first part (1), and;
- means of actuating the first part (1) which pulls the second part (2) through the retractable pin (10) in the position of engagement, where the pin (10) reaches the height of the hole (5) and snaps into the hole (5).

2. Device according to claim 1, wherein the first shaft (1.1) has means of attachment to the drive shaft.

3. Device according to claim 2, wherein the drive shaft has a lateral surface formed by flat faces and the means of attachment the first shaft (1.1) to the said drive shaft are formed by at least one flat face (11) on the inner surface of the first shaft (1.1).

4. Device according to any one of the preceding claims, wherein the hole (5) of the first part (1) is arranged in an area of the side surface (4) close to the cover (3).

5. Device according to any one of the preceding claims, wherein the flange (9) is perpendicular to the first stop (8.1) and is arranged at least on a part of the contour thereof.

6. Device according to claim 1, wherein the means of actuating the first part (1) consists of an oil-hydraulic motor.

## Patentansprüche

1. Schnellverbindungsvorrichtung für Kabelträger und Kabelauszug für landwirtschaftliche Freischneider- oder Reinigungsmaschinen zur Rodung mit Hilfe von Kabeln (7) mit einer Drehbewegung um eine Antriebswelle, wobei die Schnellverbindungsvorrichtung umfasst:
ein erstes Teil (1) mit einer ersten Hohlwelle (1.1), die geeignet ist, die Antriebswelle in ihrem Inneren aufzunehmen, eine Abdeckung (3) an einem Ende der ersten Welle (1.1), sowie eine von dieser ausgehende Seitenfläche (4) und zwei diametral gegenüberliegende Kerben (6), die sich ausgehend von der Abdeckung (3) gegenüber liegend erstrecken und einen Durchgang der Enden eines Kabels (7) ermöglichen;
ein zweites Teil (2), das geeignet ist, in den ersten Teil (1) eingesetzt zu werden, und eine zweite Hohlwelle (2.1) aufweist, die den Durchgang der ersten Welle (1.1) in ihrem Inneren und das Aufwickeln des Kabels (7) um diese herum zwischen einem ersten und einem zweiten Anschlag (8.1, 8.2) ermöglicht, die an den Enden der zweiten Welle (2.1) befestigt sind,
**dadurch gekennzeichnet, dass:**
- die Seitenfläche (4) des ersten Teils (1) ein Durchgangsloch (5) aufweist;
- der erste Anschlag (8.1) des zweiten Teils (2) einen Flansch (9) hat, der dem zweiten Anschlag (8.2) zugewandt ist;
wobei die Schnellverbindungsvorrichtung ferner umfasst:
einen einziehbaren Stift (10), der an der Außenfläche des Flansches (9) angeordnet ist, so dass er eine Position zum Eingreifen in das Durchgangsloch (5) für eine fixierte Position des zweiten Teils (2) relativ zum ersten Teil (1) und eine von dem Durchgangsloch (5) gelöste Position für eine frei drehbare Position des zweiten Teils (2) innerhalb des ersten Teils (1) hat, und;
ein Mittel zum Betätigen des ersten Teils (1), das das zweite Teil (2) durch den einziehbaren Stift (10) in die Position des Eingreifens zieht, wobei der Stift (10) die Höhe des Durchgangslochs (5) erreicht und in das Loch (5) einrastet.

2. Vorrichtung gemäß Anspruch 1, wobei die erste Welle (1.1) Mittel zur Befestigung an der Antriebswelle hat.

3. Vorrichtung gemäß Anspruch 2, wobei die Antriebswelle eine durch flache Flächen gebildete laterale Oberfläche hat und die Mittel zur Befestigung der ersten Welle (1.1) an der genannten Antriebswelle durch mindestens eine flache Fläche (11) an der inneren Oberfläche der ersten Welle (1.1) gebildet sind.

4. Vorrichtung gemäß einem oder mehrere der vorhergehenden Ansprüche, wobei das Loch (5) des ersten Teils (1) in einem Bereich der Seitenfläche (4) nahe der Abdeckung (3) angeordnet ist.

5. Vorrichtung gemäß einem oder mehrere der vorhergehenden Ansprüche, wobei der Flansch (9) rechtwinklig zu dem ersten Anschlag (8.1) steht und zumindest an einem Teil von dessen Kontur angeordnet ist.

6. Vorrichtung gemäß Anspruch 1, wobei die Betätigungsmittel für das erste Teil (1) aus einem ölhydraulischen Motor besteht.

## Revendications

1. Dispositif d'accouplement rapide pour support de câbles et extraction de câbles pour machines agricoles de débroussaillage ou de nettoyage, pour le débroussaillage au moyen de câbles (7) avec un mouvement de rotation autour d'un arbre d'entraînement, ledit dispositif d'accouplement rapide comprenant :
- une première pièce (1) comprenant un premier arbre creux (1.1) adapté pour la connexion à l'intérieur de celui-ci de l'arbre d'entraînement, un couvercle (3) à une extrémité du premier arbre (1.1), et une surface latérale (4) émergeant de celle-ci et deux fentes diamétralement opposées (6), qui s'étendent depuis l'extrémité opposée au couvercle (3) jusqu'à une section intermédiaire et permettent aux extrémités d'un câble (7) de passer à travers elles ;
- une deuxième pièce (2) apte à s'emboîter à l'intérieur de la première pièce (1), comprenant un deuxième arbre creux (2.1), qui permet le passage du premier arbre (1.1) à l'intérieur de celui-ci et l'enroulement du câble (7) autour de lui, entre une première et une deuxième butée (8.1, 8.2) fixées aux extrémités du deuxième arbre (2.1),
**caractérisé en ce que** :
- la surface latérale (4) de la première pièce (1) comporte un trou traversant (5) ;
- la première butée (8.1) de la deuxième pièce (2) présente une bride (9) faisant face à la deuxième butée (8.2) ;
dans lequel le dispositif d'accouplement rapide comprend en outre :
- une broche rétractable (10) disposée sur la face externe de la bride (9), de telle sorte qu'elle présente une position d'engagement dans le trou traversant (5) pour une position fixe de la deuxième pièce (2) par rapport à la première pièce (1) et une position dégagée du trou traversant (5), pour une position de rotation libre de la deuxième pièce (2) à l'intérieur de la première pièce (1), et ;
- des moyens d'actionnement de la première pièce (1) qui tirent la deuxième pièce (2) à travers la broche rétractable (10) dans la position d'engagement, où la goupille (10) atteint la hauteur du trou (5) et s'enclenche dans le trou (5).

2. Dispositif selon la revendication 1, dans lequel le premier arbre (1.1) présente des moyens de fixation à l'arbre d'entraînement.

3. Dispositif selon la revendication 2, dans lequel l'arbre d'entraînement présente une surface latérale formée de faces planes et les moyens de fixation du premier arbre (1.1) audit arbre d'entraînement sont formés par au moins une face plane (11) sur la surface interne du premier arbre (1.1).

4. Dispositif selon l'une quelconque des revendications précédentes, dans lequel le trou (5) de la première pièce (1) est disposé dans une zone de la surface latérale (4) proche du couvercle (3).

5. Dispositif selon l'une quelconque des revendications précédentes, dans lequel la bride (9) est perpendiculaire à la première butée (8.1) et est disposée au moins sur une partie du contour de celle-ci.

6. Dispositif selon la revendication 1, dans lequel les moyens d'actionnement de la première partie (1) sont constitués par un moteur oléohydraulique.
